# EUROPÄISCHE PATENTSCHRIFT

(11) **EP 0 874 676 B1**
(45) Veröffentlichungstag und Bekanntmachung des Hinweises auf die Patenterteilung: **22.03.2000**
(21) Anmeldenummer: 96934763.2
(22) Anmeldetag: 19.10.1996
(51) Int. Cl.: B01D 35/147, B01D 27/10

(54) **FILTERVORRICHTUNG MIT BYPASSVENTIL**
FILTER DEVICE WITH A BYPASS VALVE
DISPOSITIF DE FILTRATION A VANNE DE DERIVATION

(30) Priorität: 13.12.1995 DE 19546440
(43) Veröffentlichungstag der Anmeldung: 04.11.1998
(73) Patentinhaber: HYDAC FILTERTECHNIK GmbH, D-66273 Sulzbach (DE)
(72) Erfinder: MEES, Harald, D-66822 Lebach (DE); SAKRASCHINSKY, Michael, D-66386 St. Ingbert (DE)
(74) Vertreter: Patentanwälte Bartels und Partner
(86) Internationale Anmeldenummer: EP9604555
(87) Internationale Veröffentlichungsnummer: WO9721481

(56) Entgegenhaltungen:
- DE-A- 3 904 701
- DE-A- 4 214 500
- US-A- 3 618 776
- US-A- 4 279 746

## Beschreibung

Die Erfindung betrifft eine Filtervorrichtung mit Bypaßventil, das bei zugesetztem Filterelement einen fluidführenden Weg zu einem Auslaß freigibt und das ein Schließteil aufweist, auf das mindestens eine Schließfeder einwirkt.

Dahingehende Filtervorrichtungen sind in einer Vielzahl von Ausführungsformen und Baugrößen bekannt. Innerhalb der Filtervorrichtung ist ein hohlzylinderartiges Filterelement angeordnet, das über einen Einlaß in die Filtervorrichtung zugeführte Schmutzflüssigkeit von ihren Verunreinigungen befreit, wobei das jeweilige Filterelement in der Regel von außen nach innen durchströmt wird und die Filtermatte des Filterelementes stützt sich entlang eines mit Durchlässen versehenen Stützrohres ab. Die derart filtrierte Flüssigkeit wird dann über einen Auslaß aus der Filtervorrichtung zur weiteren Verwendung abgeführt. Je länger das Filterelement für die Filtration in Betrieb ist, umso mehr wird es von den Verschmutzungen zugesetzt, bis schließlich das Filterelement eine nahezu undurchlässige Barriere für den Fluidstrom bildet und dieser nicht mehr zur Auslaßseite der Filtervorrichtung gelangt. Um eine dahingehende Unterbrechung des Fluidstromes zu vermeiden, was gegebenenfalls eine Außerbetriebnahme einer gesamten hydraulischen Anlage zur Folge haben kann, ist innerhalb der Filtervorrichtung ein Bypaßventil vorgesehen, das ein federbelastetes Schließteil aufweist, das mit zunehmendem Fluiddruck innerhalb der Filtervorrichtung schließlich öffnet und einen fluidführenden Weg unter Ausschalten des Filterelementes unmittelbar vom Ein- zum Auslaß freigib;. Dahingehende Bypaßventile dienen mithin der Betriebssicherheit und vermeiden ungewollte Druckanstiege, was auch zu Beschädigungen innerhalb einer hydraulischen Anlage führen kann.

Die bekannten, zum Einsatz kommenden Bypaßventile weisen im wesentlichen zwei Deckelteile auf, die über eine Druckfeder als Schließfeder auseinandergehalten werden, wobei ein Deckelteil innerhalb des Filterelementes festgelegt ist und das andere Deckelteil unter dem Einfluß der Schließfeder den fluidführenden Weg bis zu einem vorgebbaren Druckschwellenwert innerhalb der Filtervorrichtung versperrt. Das Bypaßventil ist also in jedem Fall für einen bestimmten Druckwert, der der Öffnungskraft für das Schließteil entspricht, ausgelegt und der jeweiligen Filtervorrichtung sowie dem für sie vorgesehenen Verwendungszweck speziell angepaßt. Sollen mit der Filtervorrichtung andere Anwendungen mit geänderten Druckverhältnissen durchgeführt werden und abhängig von den in der Filtervorrichtung herrschenden Drücken ist ein entsprechend seiner Schließkraft ausgelegtes anders konzipiertes Bypaßventil vorzusehen. Dies führt insbesondere am Lager zu einer Erhöhung der Kosten, da eine Vielzahl von verschiedensten Bypaßventilen bevorratet werden muß. Eine spätere Änderung des Verwendungszweckes der einmal ausgelieferten Filtervorrichtung ist nur mit entsprechend hohem Aufwand möglich, da in Abhängigkeit von den in der Filtervorrichtung herrschenden Drücken ein vollständig neues Bypaßventil mit geändertem Schließkraftverhalten einzusetzen ist.

Durch die DE 39 04 701 A1 ist es bekannt, die Öffnungskraft und mithin die Federvorspannung bei einem Filterelement dahingehend vorzugeben, daß von vornherein ein- oder beidseitig mehrere Windungen der Schraubenfeder, auch im entspannten Zustand dieser Feder, aneinander anliegen. Eine Verstelleinrichtung, um mit derselben Schraubenfeder mehrere Öffnungskräfte frei einstellen zu können, ist nicht vorgesehen.

Eine gattungsgemäße Filtervorrichtung mit Bypaßventil ist durch die US-A-4 279 746 bekannt. Die bekannte Filtervorrichtung ist mit einem Bypaßventil versehen, daß bei zugesetztem Filterelement einen fluidführenden Weg zu einem Auslaß freigibt, wobei ein Schließteil vorhanden ist, auf das eine Schließfeder einwirkt, wobei zum Einstellen der Federvorspannung und damit der Öffnungskraft für das Schließteil eine Verstelleinrichtung vorgesehen ist. Als Verstelleinrichtung weist die bekannte Lösung einen Arretierring auf, der zum stufenweisen Verstellen der Federvorspannung längs eines Haltestabes verfahrbar ist und in vorgebbaren Raststellungen mit diesem verrastbar ist. Als Rastmittel dient dabei ein Federclip, der in die Rastöffnungen des Haltestabes einsteckbar ist und einen Endanschlag für den federbelasteten Arretierring darstellt. Bei dieser bekannten Anordnung ist die Handhabung zum Einstellen der Öffnungskraft für das Schließ teil schwierig und kompliziert vorzunehmen.

Durch die DE-A-4 214 500 ist ein Haltekäfig in Form eines Stützkörpers offenbart, der als Hohlzylinder mit Rastausnehmungen ausgebildet ist. Innerhalb dieses Haltekäfigs ist ein federbelastetes Schließteil angeordnet, das ab einem vorgebbaren gewünschten Druckschwellenwert öffnet, so daß ebenfalls eine Umgehungs- oder Überdruckfunktion verwirklicht ist. Eine Veränderung der Federschließkraft und damit der Öffnungskraft für das Schließteil ist nach erfolgtem Zusammenbau der Vorrichtung zum Umgehungs- oder Überdruckventil praktisch nicht mehr möglich, da der Arretierring mit seinen Rastnasen im Haltekäfig verrastet ist.

Ausgehend von diesem Stand der Technik liegt der Erfindung die Aufgabe zugrunde, eine Filtervorrichtung zu schaffen, die sich kostengünstig ohne bauliche Änderungen an verschiedenste Anwendungsfälle in einem vorgebbaren Druckbereich auch bei bereits ausgelieferten Filtervorrichtungen bei geändertem Betrieb mit geänderten Druckverhältnissen anpassen läßt, ohne daß komplizierte Handhabungsvorgänge notwendig werden. Eine dahingehende Aufgabe löst eine Vorrichtung mit den Merkmalen des Anspruches 1.

Dadurch, daß der jeweilige Haltestab Teil eines Haltekäfigs ist, daß der Arretierring Aussparungen für den freien Durchgriff der Haltestäbe des Haltekäfigs aufweist, die an ihren jeweils freien Enden Rasten aufweisen, die durch Verdrehen des Arretierringes in Eingriff mit Rastausnehmungen desselben bringbar sind, läßt sich, sofern die Schließkräfte der Schließfeder nicht allzu hohe Werte einnehmen, eine Justierung derselben durch Verdrehen des Arretierringes von Hand erreichen oder ansonsten unter Zuhilfenahme von Verstellvorrichtungen, die jedoch dann konstruktiv einfach und kostengünstig aufgebaut sein können. Dadurch, daß die Rastausnehmungen unter Bildung jeweils einer Raststufe in Gruppen zusammengefaßt in verschiedenen Ebenen des Arretierringes angeordnet sind, wobei die Aussparungen derart Radialschlitze aufweisen, daß in Abhängigkeit von der Drehrichtung des Arretierringes eine Verrastung mit der einen oder mit der jeweils anderen Gruppe an Rastausnehmungen erfolgt, läßt sich durch eine einfache Zustellbewegung des Arretierringes und Einrasten in die vorgesehene Raststufe die Federlänge der jeweiligen Schließfeder verändern und mithin die auf den Fluiddruck ansprechende Öffnungskraft für das Schließteil.

Bei einer bevorzugten Ausführungsform der erfindungsgemäßen Filtervorrichtung ist zwischen den Haltestäben des Haltekäfigs die jeweilige Schließfeder aufgenommen, die sich mit ihrem einen freien Ende an dem Arretierring und mit ihrem anderen Ende an dem Schließteil abstützt, das entlang den Haltestäben geführt von einer Schließstellung entgegen der Wirkrichtung der jeweiligen Schließfeder in eine Öffnungsstellung und umgekehrt bewegbar ist. Der die Haltestäbe umfassende Arretierring wirkt einem Aufweiten des Haltekäfigs im Bereich der freien Enden der Haltestäbe entgegen, auch wenn die zwischen Arretierring und Schließteil herrschende Federvorspannung sehr große Werte annimmt.

Bei einer weiteren bevorzugten Ausführungsform der erfindungsgemäßen Filtervorrichtung ist das Schließteil haubenförmig ausgebildet und weist außenumfangsseitig diametral einander gegenüberliegende Ausnehmungen für die Aufnahme der zugeordneten Haltestäbe auf, wobei die ballig ausgebildete Schließfläche des Schließteils in dichtende Anlage mit einer ringförmigen Anlagefläche des Haltekäfigs bringbar ist. Durch die unmittelbare Führung des Schließteils entlang den Haltestäben, die in die zugeordneten Ausnehmungen eingreifen, ist ein Verkanten des Schließteils vermieden und eine sichere Führung erreicht. Aufgrund der ballig ausgebildeten Schließfläche ist eine günstige Einleitung der durch das Fluid hervorgerufenen Öffnungskräfte auf das Bypaßventil erreicht. Auch kommt es zwischen den aneinanderliegenden Flächen zu einer linienförmigen Kraftverteilung mit hohen Dichtkräften, so daß eine sichere Abdichtung im normalen Betriebszustand der Filtervorrichtung erreicht ist.

Bei einer bevorzugten Ausführungsform weist der Arretierring auf gegenüberliegenden Seiten, von denen eine der Abstützung der jeweiligen Schließfeder dient, mindestens eine Verrastungsmöglichkeit für die Haltestäbe auf. Bei der dahingehenden Ausgestaltung läßt sich dann der Arretierring in Abhängigkeit von den einzustellenden Druckverhältnissen beidseitig für eine Druckeinstellung verwenden, was wiederum die Anzahl der möglichen Einstellstufen erhöht.

Bei einer bevorzugten Ausführungsform der erfindungsgemäßen Filtervorrichtung begrenzt der Haltekäfig an seinem, den Rasten gegenüberliegenden Ende mit Stegteilen einen Aufnahmeraum, der der Aufnahme eines Filtermittels dient. Bei derart eingesetztem Filtermittel und auftretender Bypaßsituation läßt sich dann zumindest über dieses Filtermittel noch eine Grobfiltration erreichen, um zu vermeiden, daß gröbste Verschmutzungen über das dann geöffnete Bypaßventil in den Hydraulikkreis gelangen.

Bei einer besonders bevorzugten Ausführungsform der erfindungsgemäßen Filtervorrichtung ist für die Aufnahme des Filterelementes ein Haltering vorgesehen, der zum lösbaren Verbinden mit einem ringförmigen Flansch des Haltekäfigs Verbindungsmittel aufweist. Bei einer dahingehenden Ausgestaltung läßt sich ein verbrauchtes Filterelement gegen ein neues austauschen, ohne daß das Bypaßventil mit entsorgt werden müßte, was ansonsten der Fall ist, wenn das Filterelement im wesentlichen einstückig mit dem Bypaßventil als Produkteinheit verbunden ist. Durch das separate Entfernen des Filterelementes über den zugeordneten Haltering ist auch das Recycling des Filterelementes vereinfacht.

Bei einer weiteren bevorzugten Ausführungsform der erfindungsgemäßen Filtervorrichtung kann nach Entfernen des Bypaßventils der in der Vorrichtung freigegebene Öffnungsquerschnitt mit einem Deckelteil verschlossen werden, das über die Verbindungsmittel des Halteringes mit diesem verbindbar ist. Im Sinne eines modularen Aufbaues der Filtervorrichtung läßt sich diese dann auch ohne eingreifende bauliche Änderungen ohne das Bypaßventil ausliefern, sofern anwenderseitig der Einsatz eines Bypaßventils nicht in Frage kommt, beispielsweise weil Fluidströme auf jeden Fall mittels eines Filterelementes vor dem weiteren Eintritt in den Hydraulikkreis zu filtrieren sind.

Im folgenden wird die Filtervorrichtung mit Bypaßventil anhand der Zeichnung näher erläutert.

Es zeigen in prinzipieller Darstellung die
- Fig.1: teilweise im Längsschnitt, teilweise in Ansicht den oberen Teil der Filtervorrichtung mit teilweiser Darstellung des Filterelementes und eingesetztem Bypaßventil;
- Fig.2: teilweise im Schnitt, teilweise in Ansicht den Haltekäfig mit Haltestäben;
- Fig.3: eine Draufsicht auf den Haltekäfig nach der Fig.2;
- Fig.4,5 und 6: eine Unteransicht, einen Längsschnitt sowie eine Draufsicht auf den Arretierring;
- Fig.7 und 8: einen Längsschnitt bzw. eine Draufsicht auf das Schließteil;
- Fig.9: einen Längsschnitt durch eine geänderte Ausführungsform des Bypaßventils mit nicht wechselbarem Filterelement;
- Fig.10: eine weitere geänderte Ausführungsform mit eingesetztem Deckelteil anstelle des Bypaßventils.

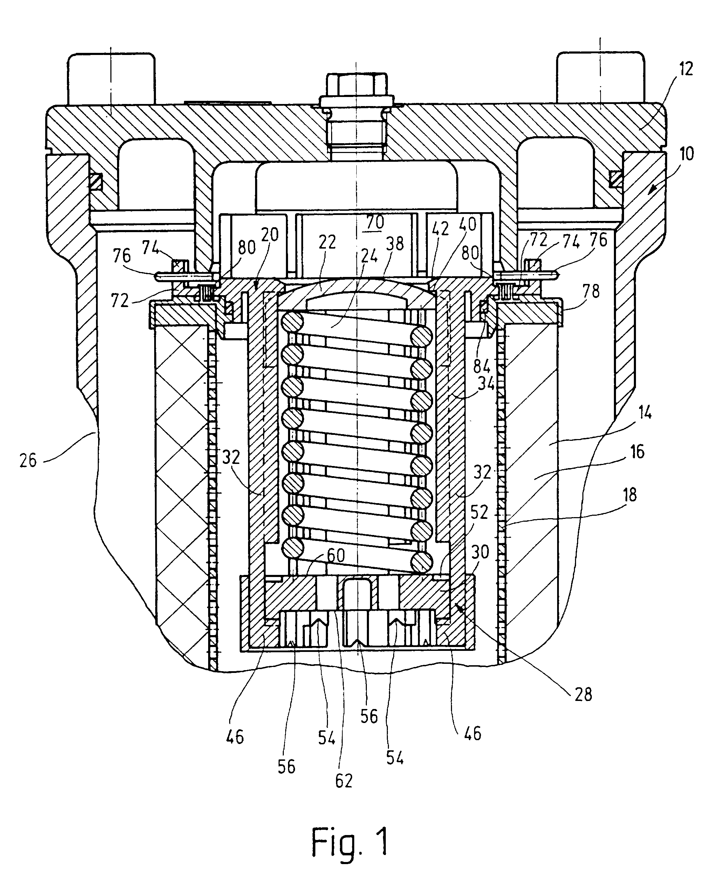

Die in der Fig.1 mit ihrem oberen Teil dargestellte Filtervorrichtung weist ein als Ganzes mit 10 bezeichnetes Gehäuse auf, das über Verschraubungen mit einem Deckel 12 dichtend verbunden ist. Innerhalb der Filtervorrichtung ist ein hohlzylinderartiges Filterelement 14 angeordnet, dessen Filtermatte 16 sich an einem Stützrohr 18 mit Durchlässen abstützt, wobei das Stützrohr 18 ebenfalls einen Hohlzylinder ausbildet. Innerhalb der Vorrichtung ist ein als Ganzes mit 20 bezeichnetes Bypaßventil angeordnet, das ein Schließteil 22 aufweist, auf das eine Schließfeder 24 einwirkt. Die Schließfeder 24 ist eine Druckfeder, die in der Darstellung nach der Fig.1 mit einer vorgebbaren Schließkraft unter Vorspannung das Schließteil 22 in schließender Anlage hält. Die als Schraubenfeder ausgebildete zylindrische Schließfeder 24 weist einen im wesentlichen linearen Federkennlinienverlauf auf, kann aber beispielsweise auch konisch ausgebildet einen progressiven Kennlinienverlauf aufweisen. Auch können mehrere Federelemente (nicht dargestellt) hintereinander angeordnet oder parallel geschaltet sein, indem eine Schließfeder die jeweils andere umfangsseitig umgibt, um das Schließteil 22 in der unbetätigten Stellung in seiner Schließstellung zu halten. Zum Zuführen der Schmutzflüssigkeit ist in dem Gehäuse 10 der Filtervorrichtung ein Einlaß 26 vorgesehen und das Filterelement 14 begrenzt auf seiner in der Fig.1 nicht dargestellten Unterseite einen Auslaß am Boden des Filtergehäuses 10 zwecks Abfuhr der filtrierten Flüssigkeit. Das Filterelement 14 bildet also eine filtrierende Barriere zwischen dem Einlaß 26 und dem Auslaß.

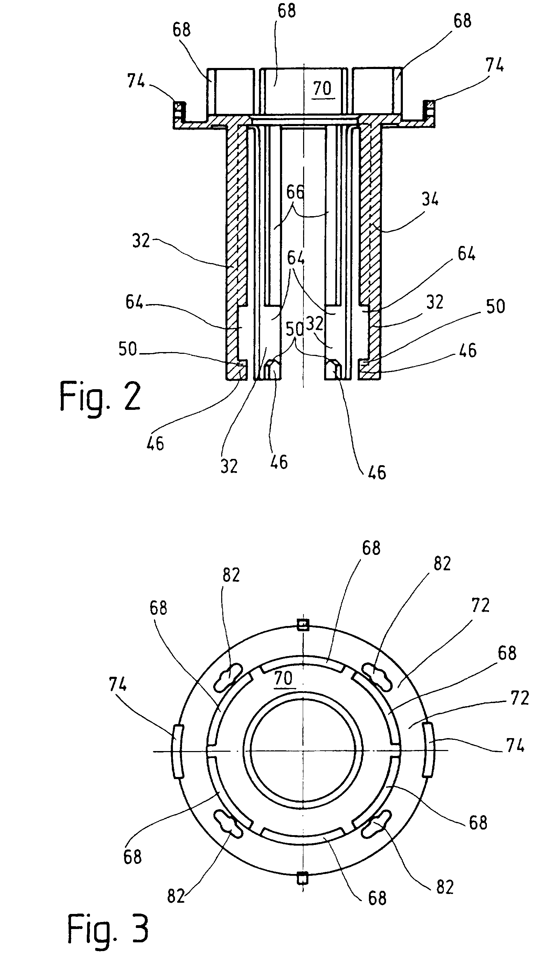

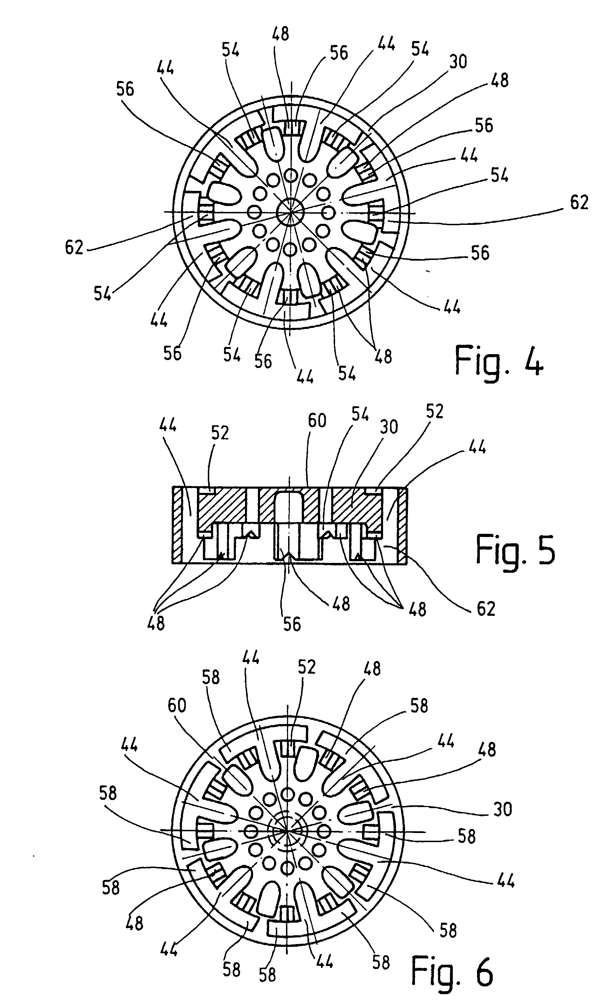

Zum Einstellen der Federvorspannung und der Öffnungskraft für das Schließteil 22 ist eine als Ganzes mit 28 bezeichnete Verstelleinrichtung vorgesehen, die die Federlänge der Schließfeder 24 verändert. Zum stufenweisen Verstellen der Federvorspannung weist die Verstelleinrichtung 28 einen Arretierring 30 auf, wie er näher in den Fig.4 bis 6 dargestellt ist. Dieser Arretierring 30 ist längs von Haltestäben 32 eines Haltekäfigs 34 verfahrbar und in vorgebbare Raststellungen mit diesem verrastbar. Der dahingehende Haltekäfig 34 mit seinen Haltestäben 32 ist in den Fig.2 und 3 näher dargestellt. Wie die Fig.1 zeigt, ist zwischen den Haltestäben 32 des Haltekäfigs 34 die Schließfeder 24 unter Beibehaltung eines Abstandes aufgenommen, wobei sich die Schließfeder 24 mit ihrem einen freien Ende an dem Arretierring 30 und mit ihrem anderen Ende an der Unterseite des Schließteiles 22 abstützt, das entlang den Haltestäben 32 geführt von einer Schließstellung, wie sie in der Fig.1 gezeigt ist, entgegen der Wirkrichtung der Schließfeder 24 in eine Öffnungsstellung und umgekehrt bewegbar ist. Die Federlänge der Schließfeder 24 ist im unbetätigten Zustand des Bypaßventils 20, also durch das Abstandsmaß zwischen dem Schließteil 22 und der jeweiligen Oberseite des Arretierringes 30, festgelegt.

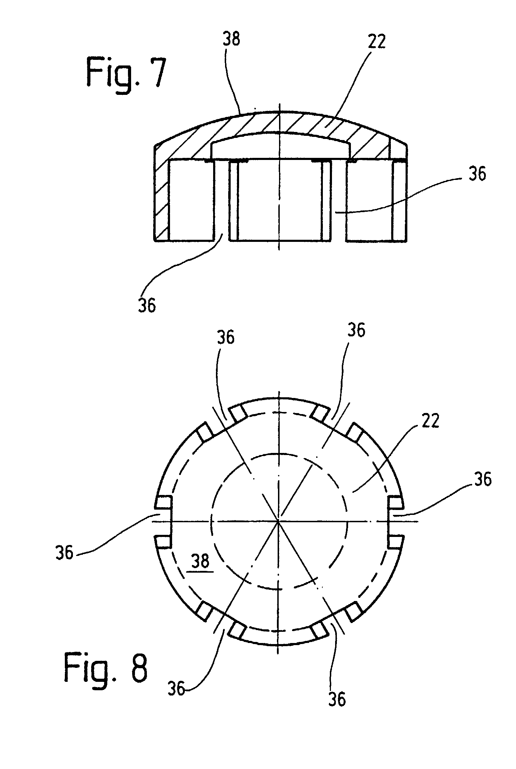

Das Schließteil 22 ist, wie dies insbesondere die Fig.7 und 8 zeigen, haubenförmig ausgebildet und weist außenumfangsseitig diametral einander gegenüberliegende Ausnehmungen 36 für die Aufnahme der zugeordneten Haltestäbe 32 auf, wobei die ballig ausgebildete Schließfläche 38 des Schließteils 22 in dichtende Anlage mit einer ringförmigen Anlagefläche 40 des Haltekäfigs 34 bringbar ist. Die ringförmige Anlagefläche 40 des Haltekäfigs 34 ist auf der Unterseite eines ringförmigen Vorsprunges angeordnet und ist entlang einer geschlossenen Ringlinie 42 in dichtender Anlage mit der Schließfläche 38 des Schließteils 22. Der Arretierring 30 weist durchgehende Aussparungen 44 für den freien Durchgriff der sechs Haltestäbe 32 auf, die im Querschnitt T-förmig ausgebildet sind und die an ihren jeweils freien Enden einander zugewandte Rasten 46 aufweisen, die durch Verdrehen des Arretierringes 30 in Eingriff mit Rastausnehmungen 48 des Arretierringes 30 bringbar sind, was noch näher erläutert werden wird. Die Rasten 46 des Haltekäfigs 34 weisen auf ihrem dem freien Ende der Haltestäbe 32 abgekehrten Ende dachförmige Vorsprünge 50 auf, die in korrespondierend ausgebildete und mithin ebenfalls dachartige Rastausnehmungen 48 des Arretierringes 30 für eine Verrastung eingreifen können.

Wie insbesondere die Fig.1 und 5 zeigen, sind die Rastausnehmungen 48 unter Bildung jeweils einer Raststufe in drei Gruppen 52,54 und 56 zusammengefaßt, die in verschiedenen horizontalen Ebenen des Arretierringes 30 angeordnet sind. Die Aussparungen 44 weisen dabei derart nach beiden Seiten hin Radialschlitze 58 auf, daß in Abhängigkeit von der Drehrichtung (links oder rechts) des Arretierringes 30 eine Verrastung mit der einen oder der jeweils anderen Gruppe 52,54,56 an Rastausnehmungen 48 erfolgt. Die Fig.6 zeigt eine Draufsicht auf den Arretierring 30 nach der Fig.5, der auf seiner Oberseite 60 eine erste Gruppe 52 an dachartigen Rastausnehmungen 48 aufweist. Diese Rastausnehmungen 48 der ersten Gruppe 52 sind diametral einander gegenüberliegend und in die jeweiligen Radialschlitze 58 mündend angeordnet. Die Rastausnehmungen 48 der ersten Gruppe 52 sind in einer horizontalen Ebene angeordnet sowie jeweils rechts und links von den zugeordneten Ausnehmungen 44. Da bei der ersten Gruppe 52 doppelt so viele Rastausnehmungen 48 in einer Ebene vorhanden sind wie Rasten 46 an den Haltestäben 32, ist unabhängig von der Drehrichtung des Arretierringes 30 nach links oder rechts dem jeweiligen Haltestab 32 zugeordnet eine Arretiermöglichkeit vorhanden. Auf der der Oberseite 60 gegenüberliegenden Unterseite 62 des Arretierringes 30 sind zwei weitere Gruppen 54 und 56 an Verrastungsmöglichkeiten vorgesehen, wobei die dahingehenden Rastausnehmungen 48 je nach Gruppenzuordnung auf verschieden langen Tragstäben angeordnet sind. In Abhängigkeit von der axialen Zustellbewegung des Arretierringes 30 längs den Haltestäben 32 des Haltekäfigs 34 und in Abhängigkeit von der Drehrichtung des Arretierringes 30 rasten dann die Rasten 46 in der einen Gruppe 54 oder in der anderen Gruppe 56 ein und bestimmen mithin die jeweils vorgebbare Federlänge der Schließfeder 24.

Zum Drehen und anschließenden Längsverfahren des Arretierringes 30 im Bereich des unteren Endes der Haltestäbe 32 weisen die jeweiligen Rasten 46 einen gleichgearteten freizulassenden Abstand 64 zu den vorstehenden Stegteilen 66 des Haltekäfigs 34 auf, wobei das Abstandsmaß des Abstandes 64 der Höhe des jeweils verwendeten Arretierringes 30 entsprechend angepaßt ist. Die Aussparungen 44 des Arretierringes 30 weisen quer zu den Radialschlitzen 58 dermaßen eine Aussparungsbreite auf, daß die freien Enden der Haltestäbe 34 mit ihren Rasten 46 diese Aussparungen 44 zum Aufschieben des Arretierringes 30 auf den Haltekäfig 34 durchgreifen können.

Bei der Darstellung nach der Fig.1 sind die nach innen vorstehenden Rasten 46 an den freien Enden der Haltestäbe 32 in Anlage mit der zweiten Gruppe 54 an Rastausnehmungen 48 auf der Unterseite 62 des Arretierringes 30. Die Federlänge der Schließfeder 24 ist mithin durch den dadurch vorgegebenen Abstand zwischen Schließteil 22 und Arretierring 30 bestimmt. Schiebt man in Blickrichtung auf die Fig.1 gesehen den Arretierring 30 nach oben bis in die Höhe der dritten Gruppe 56 an Rastausnehmungen 48, ist nach Verdrehen des Arretierringes 30 in die andere Richtung und unter Eingriff der Haltestäbe 32 in die gegenüberliegenden Radialschlitze 58 der Aussparungen 44 eine weitere Verrastungsmöglichkeit gegeben, bei deren Einnehmen die Federlänge der Schließfeder 24 um die Höhe des Abstandsmaßes zwischen den beiden Gruppen 54 und 56 verringert ist mit der Folge, daß eine wesentlich höhere Schließkraft auf das Schließteil 22 ausgeübt ist.

Nach vollständigem Abziehen des Arretierringes 30 vom Haltekäfig 34 und Umdrehen des Arretierringes 30 können die Rasten 46 dann in die erste Gruppe 52 an Rastausnehmungen 48 auf der Oberseite 60 des Arretierringes 30 eingreifen mit der Folge, daß die Federlänge ihren größten Wert annimmt und entsprechend die Schließkraft der Schließfeder 24 auf das Schließteil 22 verringert ist. Bei Bedarf kann der Arretierring 30 weniger oder mehr Gruppen an Verrastungsmöglichkeiten (nicht dargestellt) auf beiden Seiten 60,62 aber auch nur einseitig aufweisen. Mit den aufgezeigten drei Gruppen an Verrastungsmöglichkeiten lassen sich drei Öffnungsdrücke, beispielsweise 1, 3 und 6 bar, einstellen, wobei 1 bar mit der ersten Gruppe 52, 3 bar mit der zweiten Gruppe 54 und 6 bar mit der dritten Gruppe 56 an Rastausnehmungen 48 des Arretierringes 30 einstellbar ist. Wird bei zugesetztem Filterelement 14 der jeweils derart eingestellte Öffnungsdruck erreicht, öffnet der Fluidstrom das Bypaßventeil 20, indem er das Schließteil 22 in Blickrichtung auf die Fig.1 gesehen nach unten drückt. Der verschmutzte Fluidstrom gelangt dann direkt vom Einlaß 26 auf die Auslaßseite der Filtervorrichtung.

Der Haltekäfig 34 weist an seinem den Rasten 46 gegenüberliegenden Ende segmentartige, auf Abstand gehaltene Stegteile 68 auf, die einen ringförmigen Aufnahmeraum 70 begrenzen, der der Aufnahme eines Filtermittels (nicht dargestellt) dient. Ein dahingehendes Filtermittel kann beispielsweise aus einer Filtermatte bestehen und bei einer Bypaßsituation den verschmutzten Fluidstrom zumindest von groben Verunreinigungen befreien, bevor dieser über die Auslaßseite der Filtervorrichtung dem Hydraulikkreis zugeführt wird. Entlang der oberen Stegteile 68 ist das Bypaßventil 20 über den oberen Gehäusedeckel 12, wie in der Fig.1 dargestellt, innerhalb der Filtervorrichtung in seiner Lage gehalten. Dabei umgreifen zumindest teilweise Radialsegmente des oberen Gehäusedeckels der Filtervorrichtung die Stegteile 68 und dienen zur Lagefixierung in radialer Richtung. Die untere Elementkappe dichtet über eine Radialabdichtung mittels O-Ring.

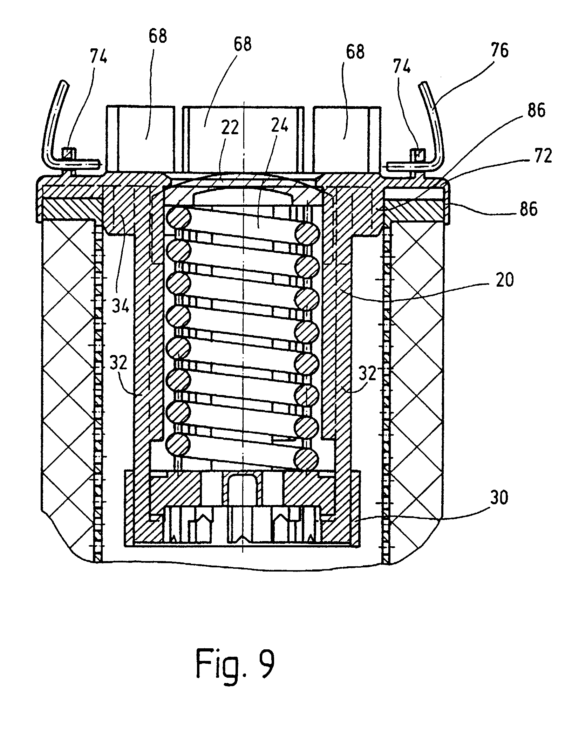

Zum Entfernen des Bypaßventils 20 aus der Filtervorrichtung 10 sind an einem ringförmigen Flansch 72 zwei Anformungen 74 vorgesehen, in die ein Drahtbügel 76 eingreift, der nach Entfernen des Gehäusedeckels 12 der Filtervorrichtung hochstellbar ist (vgl. Fig.9). Für die Aufnahme des Filterelementes 14 ist ein Haltering 78 vorgesehen, der das obere Ende des Filterelementes 14 umgreift und im wesentlichen mit dem Filterelement 14 fest verbunden ist. Zum lösbaren Verbinden weist der Haltering 78 auf seiner dem ringförmigen Flansch 72 zugekehrten Seite Verbindungsmittel 80, beispielsweise in Form vorstehender Klippsteile, auf, die außenumfangsseitig gleichmäßig verteilt sind und in zugeordnete Radialaussparungen 82 des Flansches 72 eingreifen, wobei nach Verdrehen des Halteringes 78 in der einen oder anderen Richtung die Festlegung von Haltering 78 an Flansch 72 erfolgt. In Umkehrung der Befestigungsmöglichkeit kann auch der Flansch 72 die Verbindungsmittel 80 aufweisen, die dann in den Haltering 78 mit dem Filterelement 14 eingreifen.

Mit der vorgestellten Lösung ist es möglich, das Filterelement 14, beispielsweise zum Recyceln, über seinen zugeordneten Haltering 78 von dem Bypaßventil 20 zu entkoppeln, wobei Bypaßventil 20 und Filterelement 14 dennoch eine insgesamt wechselbare Produkteinheit bilden können. Um eine sichere Abdichtung zwischen Haltering 78 und Flansch 72 zu erreichen, ist ein Dichtring 84 zwischen zugeordneten Anlageflächen der Ringe angeordnet. Bei der Ausführungsform nach der Fig.9 ist eine dahingehende Wechselmöglichkeit nicht vor. gesehen und das Filterelement 14 ist im wesentlichen einstückig mit dem ringförmigen Flansch 72 und damit mit dem Bypaßventil 20 verbunden, wobei zum Festlegen des Filterelementes 14 der ringförmige Flansch 72 nach unten weisende Ringflächen 86 aufweist. In der Fig.9 ist auch der hochgestellte Drahtbügel 76 zum Einsetzen bzw. Herausnehmen des Filterelementes 14 mit Bypaßventil 20 in bzw. aus der Filtervorrichtung dargestellt.

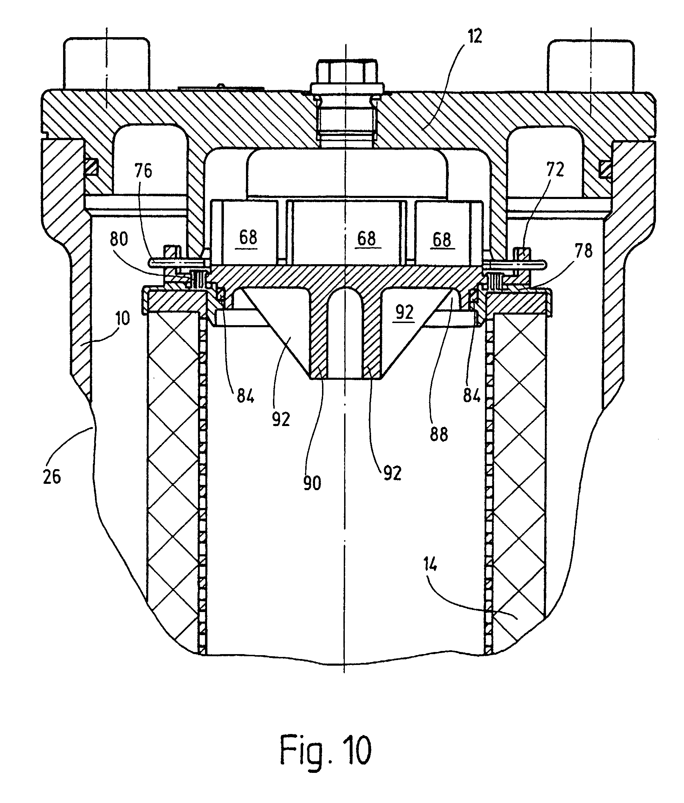

Bei der Ausführungsform nach der Fig.10 ist das Bypaßventil 20 aus der Vorrichtung entfernt und der freigegebene Öffnungsquerschnitt 88 ist mit einem Deckelteil 90 verschließbar, das über die bereits angesprochenen Verbindungsmittel 80 des Halteringes 78 mit diesem verbindbar ist. Auch hierbei ist wieder eine Abdichtung zwischen Deckelteil 90 und Haltering 78 über einen Dichtring 84 vorgesehen. Das Deckelteil 90 weist auf seiner in der Fig.10 dargestellten Unterseite sternartig angeordnete Teilrippen 92 auf, die zur Innenseite des Filterelementes 14 hin sich konisch verjüngen. Die Stegkonstruktion auf der Oberseite des Deckelteiles 90 entspricht der Ausführung der Stegteile 68 des Haltekäfigs 34, so daß insofern ebenfalls keine baulichen Änderungen vorzunehmen sind, um das Deckelteil 90 innerhalb der Filtervorrichtung festzulegen. Anwenderorientiert kann somit bei nicht benötigtem Bypaßventil 20 dieses durch das in der Fig.10 gezeigte Deckelteil 90 ersetzt werden. Da die Ausführungsformen nach den Fig. 9 und 10 sich weitgehend an der Ausführungsform nach den vorangegangenen Figuren anlehnen, werden für die in den Fig.9 und 10 gezeigten Ausführungsformen dieselben Bezugszeichen verwendet, sofern dieselben Bauteile wie in den vorangegangenen Figuren betroffen sind, wobei die dahingehenden textlichen Ausführungen auch für die geänderten Ausführungsformen gelten.

Besonders vorteilhaft ist es, das Bypaßventil 20, mit Ausnahme der Schließfeder 24, aus Kunststoff-Spritzgießteilen zu erzeugen, da dies neben einer leichten Konstruktion auch zu einer Kostenersparnis führt. So kann auch, wie dies insbesondere in den Fig. 4 bis 6 gezeigt ist, der Arretierring 30 weitere Ausnehmungen zur Gewichtsreduzierung aufweisen.

## Patentansprüche

1. Filtervorrichtung mit Bypassventil (20), das bei zugesetztem Filterelement (14) einen fluidführenden Weg zu einem Auslaß freigibt und das ein Schließteil (22) aufweist, auf das mindestens eine Schließfeder (24) einwirkt, wobei zum Einstellen der Federvorspannung und damit der Öffnungskraft für das Schließteil (22) eine Verstelleinrichtung (28) vorgesehen ist, mit der die Öffnungskraft der jeweiligen Schließfeder (24) einstellbar ist, wobei zum stufenweisen Verstellen der Federvorspannung die Verstelleinrichtung (28) einen Arretierring (30) aufweist, der längs mindestens eines Haltestabes (32) verfahrbar und in vorgebbaren Raststellungen mit diesem verrastbar ist, wobei der jeweilige Haltestab (32) Teil eines Haltekäfigs (34) ist, wobei der Arretierring (30) Aussparungen (44) für den freien Durchgriff der Haltestäbe (32) des Haltekäfigs (34) aufweist, die an ihren jeweils freien Enden Rasten (46) aufweisen, die durch Verdrehen des Arretierringes (30) in Eingriff mit Rastausnehmungen (48) desselben bringbar sind, wobei die Rastausnehmungen (48) unter Bildung jeweils einer Raststufe in Gruppen (52,54,56) zusammengefaßt in verschiedenen Ebenen des Arretierringes (30) angeordnet sind und wobei die Aussparungen (44) derart Radialschlitze (58) aufweisen, daß in Abhängigkeit von der Drehrichtung des Arretierringes (30) eine Verrastung mit der einen oder der jeweils anderen Gruppe (52,54,56) an Rastausnehmungen (48) erfolgt.

2. Filtervorrichtung nach Anspruch 1, dadurch gekennzeichnet, daß zwischen den Haltestäben (32) des Haltekäfigs (34) die jeweilige Schließfeder (24) aufgenommen ist, die sich mit ihrem einen freien Ende an dem Arretierring (30) und mit ihrem anderen Ende an dem Schließteil (22) abstützt, das entlang den Haltestäben (32) geführt von einer Schließstellung entgegen der Wirkrichtung der jeweiligen Schließfeder (24) in eine Öffnungsstellung und umgekehrt bewegbar ist.

3. Filtervorrichtung nach Anspruch 2, dadurch gekennzeichnet, daß das Schließteil (22) haubenförmig ausgebildet ist und außenumfangsseitig diametral einander gegenüberliegende Ausnehmungen (36) für die Aufnahme der zugeordneten Haltestäbe (32) aufweist und daß die ballig ausgebildete Schließfläche (38) des Schließteils (22) in dichtende Anlage mit einer ringförmigen Anlagefläche (40) des Haltekäfigs (34) bringbar ist.

4. Filtervorrichtung nach einem der Ansprüche 1 bis 3, dadurch gekennzeichnet, daß der Arretierring (30) auf gegenüberliegenden Seiten (60,62), von denen eine der Abstützung der jeweiligen Schließfeder (24) dient, mindestens eine Verrastungsmöglichkeit für die Haltestäbe (32) aufweist.

5. Filtervorrichtung nach Anspruch 4, dadurch gekennzeichnet, daß der Haltekäfig (34) an seinem, den Rasten (46) gegenüberliegenden Ende mit Stegteilen (68) einen Aufnahmeraum (70) begrenzt, der der Aufnahme eines Filtermittels dient.

6. Filtervorrichtung nach Anspruch 5, dadurch gekennzeichnet, daß für die Aufnahme des Filterelementes (14) ein Haltering (78) vorgesehen ist, der zum lösbaren Verbinden mit einem ringförmigen Flansch (72) des Haltekäfigs (34) Verbindungsmittel (80) aufweist.

7. Filtervorrichtung nach Anspruch 6, dadurch gekennzeichnet, daß nach Entfernen des Bypaßventils (20) der in der Vorrichtung freigegebene Öffnungsquerschnitt (88) mit einem Deckelteil (90) verschließbar ist, das über die Verbindungsmittel (80) des Halteringes (78) mit diesem verbindbar ist.

## Claims

1. Filter device with bypass valve (20) which when the filter element (14) is in place opens a channel to conduct a fluid to an outlet and which demonstrates a locking part (22) on which at least one locking spring (24) acts, whereby to adjust the initial tension of the spring and thus the opening pressure for the locking part (22) an adjustment device (28) is provided with which the opening pressure of the respective locking spring (24) can be adjusted, where the adjustment device (28) displays a detent ring (30) for the step-wise adjustment of the initial tension of the spring which is movable along at least one stay bar (32) and can be locked with the latter in locking positions which can be pre-set, whereby the respective stay bar (32) is part of a holding cage (34), whereby the detent ring (30) displays recesses (44) for the free extension of the stay bars (32) of the holding cage (34) which display stop notches (46) on each of their free ends which, by twisting the detent ring (30) can be brought to mesh with locking recesses (48) of the same, whereby the locking recesses (48) are respectively arranged in the form of a locking step in groups (52, 54, 56) combined at various levels of the detent ring (30) and whereby the recesses (44) display radial slits (58) in such a way that depending on the direction of rotation of the detent ring (30) locking occurs with one or other of the groups (52, 54, 56) on locking recesses (48).

2. Filter device according to Claim 1, characterised by the fact that the respective locking spring (24) is grasped between the stay bars (32) of the holding cage (34), said locking spring resting with its one free end on the detent ring (30) and with its other end on the locking part (22) which can be moved by being guided along the stay bars (32) from a closed position against the effective direction of the respective locking spring (24) into an opening position and vice versa.

3. Filter device according to Claim 2, characterised by the fact that the locking part (22) is designed in the form of a cap and on its external perimeter displays recesses (36) diametrically opposed to each other to accept the assigned stay bars (32) and the fact that spherical locking surfaces (38) of the locking part (22) can be made to form a seal with a ring-shaped locating face (40) of the holding cage (34).

4. Filter device according to one of Claims 1 to 3, characterised by the fact that the detent ring (30) displays on opposite sides (60, 62), one of which serves to support the respective locking spring (24), at least one locking option for the stay bars (32).

5. Filter device according to Claim 4, characterised by the fact that the holding cage (34) on its end opposite the locks (46) delimits a locating space (70) with ridge parts (68) which serves to hold a filter medium.

6. Filter device according to Claim 5, characterised by the fact that a retaining ring (78) is provided to grasp the filter element (14) which retaining ring displays fasteners (80) for a detachable connection with a ring-shaped flange (72) of the holding cage (34).

7. Filter device according to Claim 6 characterised by the fact that after removal of the bypass valve (20) the opening (88) created in the device can be closed with a cover part (90) which can be connected via the fasteners (80) of the retaining ring (78) with the latter.

## Revendications

1. Dispositif de filtration à vanne de dérivation (20) qui, en présence d'un élément de filtration (14) obstrué, ouvre une voie par laquelle le fluide est guidé vers une sortie et qui comporte un élément de fermeture (22), sur lequel agit au moins un ressort de fermeture (24), dans lequel, pour régler la précontrainte du ressort et, de ce fait, la force de déblocage de l'élément de fermeture (22), il est prévu un dispositif de réglage (28) permettant de régler la force de déblocage de chaque ressort de fermeture (24), dans lequel le dispositif de réglage (28) est doté d'une bague de blocage (30) qui, pour le réglage progressif de la précontrainte du ressort, peut se déplacer le long d'au moins une tige de support (32) et peut être bloquée contre celle-ci dans des positions de blocage prédéfinissables, dans lequel chaque tige de support (32) constitue une partie d'une cage de support (34), dans lequel la bague de blocage (30) est munie de trous débouchants (44) permettant le passage libre des tiges de support (32) de la cage de support (34), qui, sur leurs extrémités libres, sont munies de tétons de blocage (46) qui, à la suite d'une rotation de la bague de blocage (30), peuvent entrer en prise dans des évidements de blocage (48) de celle-ci, dans lequel les évidements de blocage (48) sont réunis par groupes (52, 54, 56) pour former respectivement un niveau de blocage dans différents plans de la bague de blocage (30), et dans lequel les trous débouchants (44) sont conçus avec des fentes radiales (58), de telle sorte que, en fonction du sens de rotation de la bague de blocage (30), le blocage est effectué avec l'un ou l'autre groupe (52, 54, 56) d'évidements de blocage (48).

2. Dispositif de filtration selon la revendication 1, caractérisé en ce que le ressort de fermeture (24) correspondant est disposé entre les tiges de support (32) de la cage de support (34), lequel ressort vient en appui avec l'une de ses extrémités libres contre la bague de blocage (30) et avec son autre extrémité contre l'élément de fermeture (22), qui peut se déplacer le long des tiges de support (32) d'une position de fermeture vers une position d'ouverture à l'encontre du sens d'action du ressort de fermeture (24) correspondant, et inversement.

3. Dispositif de filtration selon la revendication 2, caractérisé en ce que l'élément de fermeture (22) est conçu en forme de calotte et comporte des évidements (36) qui sont diamétralement opposés sur la face du contour extérieur et sont destinés à recevoir les tiges de support (32) correspondantes, et en ce que la surface de fermeture (38) de l'élément de fermeture (22), conçue en forme convexe, peut être amenée en contact étanche avec une surface de contact annulaire (40) de la cage de support (34).

4. Dispositif de filtration selon l'une quelconque des revendications 1 à 3, caractérisé en ce que la bague de blocage (30) comporte au moins une possibilité d'ancrage des tiges de support (32) sur ses faces opposées (60, 62), dont l'une sert d'appui au ressort de fermeture (24) correspondant.

5. Dispositif de filtration selon la revendication 4, caractérisé en ce que la cage de support (34) délimite par des ailettes (68), réalisées sur son extrémité opposée aux tétons de blocage (46), un espace de réception (70) destiné à recevoir un organe de filtrage.

6. Dispositif de filtration selon la revendication 5, caractérisé en ce que, pour recevoir l'élément de filtration (14), il est prévu une bague de maintien (78) qui est munie de moyens d'assemblage (80) permettant de l'assembler de manière amovible avec une collerette annulaire (72) de la cage de support (34).

7. Dispositif de filtration selon la revendication 6, caractérisé en ce que, lorsque la vanne de dérivation (20) a été retirée hors du dispositif, il est possible de fermer la section d'ouverture (88) ainsi libérée dans le dispositif avec un couvercle (90) qui peut être assemblé avec la bague de maintien (78) par l'intermédiaire des moyens d'assemblage (80) de celle-ci.
